# EUROPÄISCHE PATENTSCHRIFT

(11) **EP 3 212 525 B1**
(45) Veröffentlichungstag und Bekanntmachung des Hinweises auf die Patenterteilung: **15.08.2018**
(21) Anmeldenummer: 15801670.9
(22) Anmeldetag: 20.10.2015
(51) Int. Cl.: B65D 5/46, B65D 25/28, B65D 81/38, B65D 25/30, F16L 59/065

(54) **KASTENFÖRMIGER TRANSPORTBEHÄLTER**
BOX-TYPE TRANSPORT CONTAINER
CONTENEUR DE TRANSPORT EN FORME DE CAISSE

(30) Priorität: 27.10.2014 DE 202014008489 U
(43) Veröffentlichungstag der Anmeldung: 06.09.2017
(73) Patentinhaber: va-Q-tec AG, 97080 Würzburg (DE)
(72) Erfinder: KUHN, Joachim, 97074 Würzburg (DE); WALLASCHEK, Ines, 97082 Würzburg (DE); BAUER, Peter, 97535 Burghausen (DE); HEINEMANN, Martin, 97074 Würzburg (DE); TARASCHEWSKI, Thomas, 97070 Würzburg (DE); ESCHENBACH, Fabian, 97228 Rottendorf (DE)
(74) Vertreter: Von Rohr Patentanwälte Partnerschaft mbB
(86) Internationale Anmeldenummer: PCT/EP2015/002068
(87) Internationale Veröffentlichungsnummer: WO 2016/066251

(56) Entgegenhaltungen:
- EP-A1- 0 508 974
- EP-A1- 2 022 727
- EP-A1- 2 221 569
- WO-A2-01/42092
- DE-U1- 9 213 090
- US-A- 5 240 176
- US-A- 5 779 048
- US-A1- 2005 241 978
- US-A1- 2007 170 232
- US-A1- 2011 147 391

## Beschreibung

Die Erfindung betrifft einen kastenförmigen Transportbehälter mit den Merkmalen des Oberbegriffs von Anspruch 1.

Der bekannte kastenförmige Transportbehälter, von dem die Erfindung ausgeht (WO 2008/137883 A1) ist bestimmt und geeignet für den Transport temperaturempfindlicher, insbesondere bzgl. Schwankungen der Temperatur im Innenraum empfindlicher Güter. Solche Güter sind beispielsweise bestimmte Pharmazeutika, Spenderorgane, Blutkonserven, aber auch gegen Schwankungen der Temperatur empfindliche Kunstwerke etc.

Der bekannte kastenförmige Transportbehälter, von dem die Erfindung ausgeht, hat einen kastenförmigen Außenbehälter aus Wellpappe, aus Wellkunststoff, ggf. auch aus Metall, oder aus einer Kombination derartiger Werkstoffe. Als Wellkunststoff bezeichnet man in der Praxis gelegentlich Kunststoff-Hohlkammerplatten oder Kunststoff-Stegplatten in dünnwandiger Ausführung.

Der kastenförmige Außenbehälter hat einen Boden, vier Seitenwände und einen Deckel. Im konkreten Fall sind vier einzelne Deckel vorgesehen, wobei jeder der einzelnen Deckel an einer der vier Seitenwände schwenkbar angelenkt ist. Bekannt sind aber auch kastenförmige Transportbehälter, bei denen nur ein einziger, kompletter Deckel an einer der vier Seitenwände schwenkbar angelenkt ist.

Die Seitenwände des bekannten kastenförmigen Außenbehälters sind einlagig ausgeführt.

Um die Temperatur im Innenraum des Behälters möglichst lange gleichmäßig beizubehalten, befinden sich im Außenbehälter an den Seitenwänden flächendeckend angeordnete plattenförmige Vakuumisolationspaneele. Vakuumisolationspaneele sind für sich bekannt und werden in der den Ausgangspunkt der für die vorliegende Erfindung darstellenden Stand der Technik beschrieben (WO 2008/137883 A1). Im Einzelnen gibt es alle Informationen zu Vakuumisolationspaneelen aus weiterem Stand der Technik (WO 2004/104498 A2),

Wesentlich ist, dass zwischen dem Innenraum des kastenförmigen Transportbehälters, der zur Aufnahme des zu transportierenden Gutes dient, und der Umgebungsatmosphäre, damit also im Grunde dem kastenförmigen Außenbehälter selbst, keine Wärmebrücken bestehen. Deshalb ist es wichtig, die Spalte zwischen den Vakuumisolationspaneelen zu minimieren. Das geschieht beispielsweise dadurch, dass man den kastenförmigen Außenbehälter möglichst genau auf die Außenmaße der an den Seitenwänden flächendeckend angeordneten Vakuumisolationspaneele abstimmt.

Bei dem zuvor erläuterten, bekannten kastenförmigen Transportbehälter sind die plattenförmigen Vakuumisolationspaneele der Seitenwände quaderförmig mit glatten Rändern ausgeführt und umlaufend jeweils an einem Rand stumpf anstoßend, am anderen Rand frei vorstehend im kastenförmigen Außenbehälter angeordnet Bei einem kubischen Außenbehälter ist es dadurch möglich, alle an den Seitenwänden vorgesehenen plattenförmigen Vakuumisolationspaneele mit denselben Abmessungen herzustellen, also praktisch nur eine Größe von Vakuumisolationspaneelen einzusetzen.

Aus anderem Stand der Technik (EP 2 221 569 A1) ist es bekannt, mit der gleichen Zielsetzung die plattenförmigen Vakuumisolationspaneele der Seitenwände quaderförmig, aber mit auf 45° Gehrung angeschrägten Rändern auszuführen und aneinander auf Gehrung anstoßend anzuordnen. Auch hier erreicht man das selbe Ergebnis für einen kubischen Außenbehälter, nämlich die Verwendung nur einer Größe von Vakuumisolationspaneelen für den gesamten Außenbehälter.

Generell kann man innerhalb des kastenförmigen Außenbehälters auch noch plattenförmige oder anderweit gestaltete Latentwärmespeicherelemente vorsehen, die es erlauben, die Temperatur im Inneren des Transportbehälters über sehr lange Zeit und bei sehr weit schwankenden Außentemperaturen gleichmäßig aufrechtzuerhalten (siehe ebenfalls WO 2008/137883 A1). Für die äußere Gestalt der Latentwärmespeicherelemente ergeben sich die gleichen Möglichkeiten wie für die zuvor erläuterten plattenförmigen Vakuumisolationspaneele (siehe WO 2008/137883 A1 und EP 2 221 569 A1).

Bei einem weiteren bekannten kastenförmigen Transportbehälter (EP 2 022 727 A1) sind die Vakuumisolationspaneele unmittelbar aneinander anstoßend im Außenbehälter angeordnet und insgesamt von einer Umschäumung aus wärmeisolierendem Kunststoff umgeben.

Die Oberflächen der Vakuumisolationspaneele sind gegen mechanische Beschädigungen empfindlich. Wird die Außenhaut eines Vakuumisolationspaneels beschädigt, so verliert dieses sofort sein Vakuum und damit den größten Anteil seiner wärmedämmenden Eigenschaften. Demzufolge ist bei dem bekannten kastenförmigen Transportbehälter der kastenförmige Außenbehälter, der dort nach bevorzugter Ausführung aus Wellpappe besteht, ohne Trageöffnungen ausgeführt.

Für sich bekannt sind aus dem Stand der Technik jedoch auch Kartons aus Wellpappe, die natürlich an zumindest zwei einander gegenüber angeordneten Seitenwänden jeweils eine Trageöffnung aufweisen.

Der Lehre der Erfindung liegt das Problem zugrunde, den bekannten kastenförmigen Transportbehälter hinsichtlich seiner effizienten Einsetzbarkeit zu optimieren.

Das zuvor aufgezeigte Problem ist nach der Lehre der Erfindung bei einem kastenförmigen Transportbehälter mit den Merkmalen des Oberbegriffs von Anspruch 1 durch die Merkmale des kennzeichnenden Teils von Anspruch 1 gelöst.

Dementsprechend ist vorgesehen, dass die plattenförmigen Vakuumisolationspaneele der Seitenwände quaderförmig mit glatten Rändern ausgeführt und paarweise einander gegenüber entweder mit beiden Rändern stumpf anstoßend oder mit beiden Rändern frei vorstehend angeordnet sind, und/oder quaderförmig mit glatten Rändern ausgeführt und umlaufend jeweils an einem Rand stumpf anstoßend, am anderen Rand frei vorstehend angeordnet sind, und/oder quaderförmig, mit auf 45° Gehrung angeschrägten Rändern ausgeführt und aneinander auf Gehrung anstoßend angeordnet sind, und dass die so angeordneten Vakuumisolationspaneele der Seitenwände mit mindestens einem Spannmittel, vorzugsweise mit zwei beabstandet zueinander angeordneten Spannmittel, in ihrer gegenseitigen Relativlage fixiert und so als zusammenhängender rahmenartiger Einsatz für den Außenbehälter handhabbar sind.

Erfindungsgemäße ist vorgesehen, dass die plattenförmigen Vakuumisolationspaneele der Seitenwände mit mindestens einem Spannmittel, vorzugsweise mit zwei beabstandet zueinander angeordneten Spannmitteln, in ihrer gegenseitigen Relativlage fixiert und so als zusammenhängender rahmenartiger Einsatz für den Außenbehälter handhabbar sind. Die gegenseitige Positionierung der Vakuumisolationspaneele in diesem Einsatz unter Berücksichtigung der Kraftausübung durch das oder die Spannmittel ist besonders zweckmäßig bei quaderförmig mit glatten Rändem ausgeführten und umlaufend jeweils an einem Rand stumpf anstoßend, am anderen Rand frei vorstehend angeordneten plattenförmigen Vakuumisolationspaneelen.

Bevorzugte Ausgestaltungen und Weiterbildungen dieser Ausgestaltung eines Transportbehälters sind Gegenstand der Ansprüche 2 und 3.

Grundsätzlich ist hier die Anordnung der Vakuumisolationspaneele so wie es auch im Stand der Technik bereits bekannt ist. Erfindungsgemäß ist allerdings erkannt worden, dass ein wesentlicher Wärmeaustausch zwischen dem Inneren des Transportbehälters einerseits und der äußeren Umgebungsatmosphäre andererseits über die Spalte zwischen den Vakuumisolationspaneelen stattfindet. Wenn man es schafft, die Vakuumisolationspaneele effizient aneinander heran zu drücken, so dass die Spalte so gering wie möglich werden oder ganz verschwinden, vermeidet man diese Wärmebrücken weitestgehend. Dieses Herandrücken der Vakuumisolationspaneele aneinander kann, wie erfindungsgemäß erkannt worden ist, der kastenförmige Außenbehälter selbst nicht ausreichend leisten.

Erfindungsgemäß wird aus den Vakuumisolationspaneelen, die den Seitenwänden zugeordnet sind, ein eigenständiger zusammenhängender rahmenartiger Einsatz geschaffen, indem man diese Vakuumisolationspaneele mit mindestens einem Spannmittel, vorzugsweise mit zwei beabstandet voneinander angeordneten umlaufenden Spannmitteln, zusammenspannt. Mittels der Spannmittel werden die Vakuumisolationspaneele randseitig aneinander herangedrückt, die Spalte werden so gering wie möglich, der Wärmedurchgang an diesen Brücken wird minimiert.

Es empfiehlt sich, dass man an der offenen Seite des Einsatzes dort, wo außen das Spannmittel sitzt, einen Stützrahmen als Widerlager vorsieht, um die Kräfte des Spannmittels nach innen aufzunehmen.

Damit das Spannmittel bzw. die Spannmittel nicht in die empfindliche Außenschicht der Vakuumisolationspaneele aus Hochbarrierefolie einschneiden, schützt man die Kanten der im zusammenhängenden rahmenartigen Einsatz zusammengesetzten Vakuumisolationspaneele mit Kantenschutzelementen, beispielsweise Winkelschienen aus Karton oder Kunststoff (konstruktiv möglich ist auch Metall). So verhindert man jede Beschädigung der Außenfläche der Vakuumisolationspaneele trotz der fest zusammengepressten Ränder derselben.

Als Spannmittel kommt insbesondere ein umlaufendes Spannband, also ein im Querschnitt flacher Materialstreifen, beispielsweise aus einem hoch reißfesten Gewebe, beispielsweise einem Nylongewebe, in Frage. Damit verteilt sich die Spannkraft auf eine relativ große Fläche. Alternativ ist auch ein Spannseil einsetzbar. Man kann auch eine U-förmige Spannklammer oder mehrere U-förmige Spannklammern vorsehen. Ein Spannmittel kann auch durch eine auf die Vakuumisolationspaneele aufgeschrumpfte Schrumpffolie realisiert werden. Schließlich lässt sich ein Verspannen der Vakuumisolationspaneele auch durch ein Umschäumen der miteinander angeordneten Vakuumisolationspaneele mittels schäumbarem Kunststoff, insbesondere Polyurethan, realisieren.

Ferner kann man vorsehen, dass am Deckel ein Vakuumisolationspaneel in seiner zu den Vakuumisolationspaneelen der Seitenwände passenden Lage fest angebracht ist. Damit befindet sich das Vakuumisolationspaneel von vornherein am Deckel. Es wird mit dem Deckel auf den ggf. vorhandenen rahmenartigen Einsatz abgesenkt und hat auf jeden Fall die richtige Relativlage zu den Vakuumisolationspaneelen der Seitenwände. Besonders zweckmäßig ist die Anbringung durch Klebung, beispielsweise durch ein doppelseitiges Klebeband, oder mit Hilfe von Klettband.

Natürlich sollte im kastenförmigen Außenbehälter auch am Boden ein Vakuumisolationspaneel angeordnet sein.

Für die Anordnung des bodenseitigen Vakuumisolationspaneels gibt es ebenfalls bevorzugte Varianten. In einer ersten zweckmäßigen Variante ist vorgesehen, dass das dem Boden zugeordnete Vakuumisolationspaneel unter den Vakuumisolationspaneelen der Seitenwände angeordnet ist und in seiner Länge und Breite der Außenlänge und Außenbreite der zusammengestellten Vakuumisolationspaneele der Seitenwände entspricht oder, vorzugsweise, geringfügig größer bemessen ist. Hierfür empfiehlt es sich ferner, dass die Kantenschutzelemente sich bis auf das dem Boden zugeordnete Vakuumisolationspaneel erstrecken, so dass das dem Boden zugeordnete Vakuumisolationspaneel gemeinsam mit den Vakuumisolationspaneelen der Seitenwände verspannt ist.

Insbesondere dann, wenn das bodenseitige Vakuumisolationspaneel in den Abmessungen geringfügig größer bemessen ist als die zusammengestellten Vakuumisolationspaneele der Seitenwände, wird das bodenseitige Vakuumisolationspaneel eigenständig von den durch die Spannmittel angedrückten Kantenschutzelementen erfasst und fixiert. Hier reicht ein Übermaß im Millimeterbereich aus, um die gewünschte Anpressung zu erreichen.

Als Alternative kann man das bodenseitige Vakuumisolationspaneel auch innerhalb der Vakuumisolationspaneele der Seitenwände anordnen mit einem entsprechenden Effekt.

Nach weiter bevorzugter Lehre sollte man den Deckel mit seitlichen Führungslaschen versehen, die beim Schließen des Behälters in Führungen der angrenzenden Seitenwände des Außenbehälters eintauchen. So ist am Ende eine feste, verwindungssteife Gesamtkonstruktion des kastenförmigen Transportbehälters gegeben. Auch zwischen den Vakuumisolationspaneelen der Seitenwände und den Vakuumisolationspaneelen von Boden und Deckel gibt es dann kaum Wärmebrücken verursachende Spalte.

Wie bereits mehrfach angemerkt, geht es bei dem Gesamtkonzept primär um die Vermeidung von Wärmebrücken verursachenden Spalten. Im Gesamtkonzept kann man dazu nach bevorzugter Lehre vorsehen, dass die Außenabmessungen der Vakuumisolationspaneele im Verhältnis zu den Innenabmessungen des kastenförmigen Außenbehälters derart geringfügig größer bemessen sind, dass die Vakuumisolationspaneele bei stramm geschlossenem Deckel aneinander angepresst sind. Auf diese Weise wird sichergestellt, dass beim Schließen des Deckels ein wenig Druck von oben auf die Vakuumisolationspaneele ausgeübt wird. Wird der Deckel so fixiert, also beispielsweise durch Klebeband oder auf andere Weise stramm geschlossen, so bleiben die Vakuumisolationspaneele des geschlossenen Transportbehälters aneinander angedrückt und die Spalte zwischen den Vakuumisolationspaneelen sind auf das geringstmögliche Restmaß verengt.

Eine weitere Verbesserung hinsichtlich der Vermeidung von Wärmebrücken ergeben Dichtungsstreifen an den aneinander zur Anlage kommenden Flächen der Vakuumisolationspaneele. Das können hauchdünne Schaumstreifen sein, die an den Rändern oder sonstigen Flächen die notwendige zusätzliche Dichtungswirkung bereitstellen.

Wenn im bisherigen Text von einem Vakuumisolationspaneel die Rede ist, so versteht sich im Rahmen der Lehre der Erfindung, dass ein solches Vakuumisolationspaneel selbst wiederum auch aus mehreren einzelnen, bündig aneinander angrenzenden, kleineren Vakuumisolationspaneelen bestehen kann. Besonders zweckmäßig ist allerdings die Variante, bei der jeder Seitenwand einerseits sowie dem Boden und dem Deckel andererseits jeweils genau ein einziges, durchgehendes Vakuumisolationspaneel zugeordnet ist. In diesem Fall hat man die geringste Anzahl von Wärmebrücken bildenden Spalten.

Man kann auch größere Vakuumisolationspaneele miteinander verbinden, also beispielsweise ein insgesamt U-förmiges Vakuumisolationspaneel verwenden, das beispielsweise zwei Vakuumisolationspaneele für Seitenwände und das bodenseitige Vakuumisolationspaneel miteinander verbindet. Derartige Konstruktionen sind aus dem Stand der Technik bekannt und können hier ebenfalls eingesetzt werden.

Was den kastenförmigen Transportbehälter mit seinem kastenförmigen Außenbehälter insgesamt betrifft, so lässt sich der kastenförmige Außenbehälter konstruktiv mit einem automatisch ausfaltenden Boden, einem sog. Automatikboden, versehen. Bei einem solchen bleibt eine Öffnung etwa in der Mitte des Bodens, durch die die Oberfläche eines bodenseitigen Vakuumisolationspaneels beschädigt werden kann. Um das zu verhindern empfiehlt es sich, dass eine schützende Innenlage aus passendem Material, beispielsweise ebenfalls aus Kunststoff, am Boden eingelegt wird, um das Vakuumisolationspaneel insoweit zu schützen.

Gegenstand der Erfindung ist auch ein Einsatz aus zusammengespannten Vakuumisolationspaneelen für sich, wozu auf die Ansprüche 12 bis 15 verwiesen wird.

Im Folgenden wird die Erfindung anhand einer lediglich ein bevorzugtes Ausführungsbeispiel darstellenden Zeichnung näher erläutert. In der Zeichnung zeigt
- Fig. 1: in perspektivischer Ansicht, den Deckel geöffnet, einen kastenförmigen Transportbehälter, und zwar dessen kastenförmigen Außenbehälter ohne weiteren Inhalt,
- Fig. 2a, b: vier rahmenartig zusammengesetzte Vakuumisolationspaneele, gestaltet als zusammenhängender, rahmenartiger Einsatz für den in Fig. 1 dargestellten Außenbehälter, in zwei unterschiedlichen Varianten,
- Fig. 3: in einer Fig. 2 entsprechenden Darstellung den rahmenartigen Einsatz aus Fig. 2a zusätzlich versehen mit einem bodenseitigen Vakuumisolationspaneel,
- Fig. 4a, b: in einer Seitenansicht zwei weitere Varianten zur Anordnung eines bodenseitigen Vakuumisolationspaneels,
- Fig. 5: in einer Fig. 1 entsprechenden Darstellung den kastenförmigen Transportbehälter aus Fig. 1 nun komplettiert mit den Vakuumisolationspaneelen aus Fig. 2a im Inneren des kastenförmigen Außenbehälters,
- Fig. 6: in einer Fig. 5 entsprechenden Darstellung einen kastenförmigen Transportbehälter mit innen liegendem Stützrahmen,
- Fig. 7: die Unterseite des kastenförmigen Transportbehälters aus Fig. 5 in einer bevorzugten Ausführungsform mit Automatikboden,
- Fig. 8: den kastenförmigen Transportbehälter aus Fig. 5, nunmehr geschlossen und vor der Plombierung.

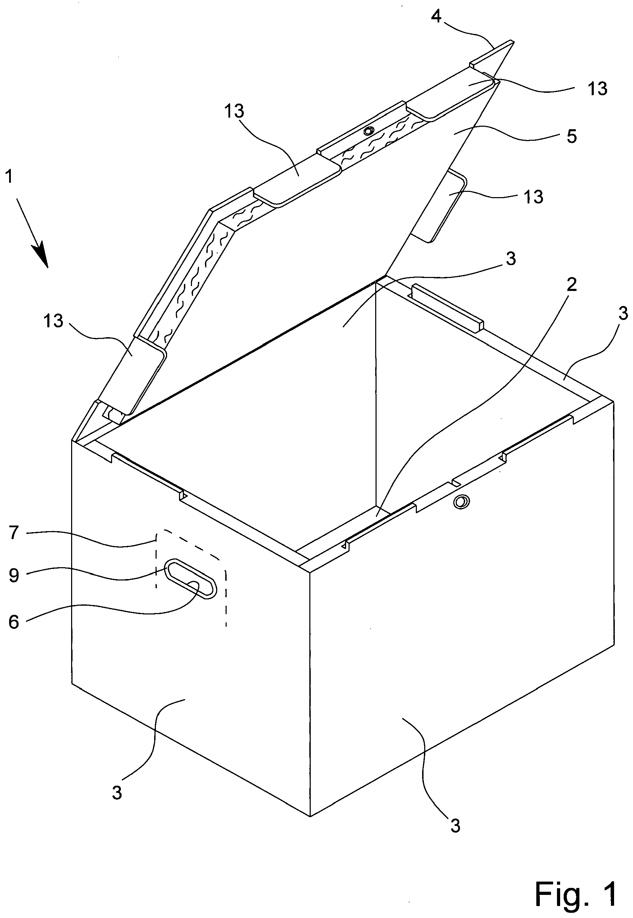

Der in Fig. 1 perspektivisch dargestellte kastenförmige Transportbehälter weist zunächst den in Fig. 1 erkennbaren kastenförmigen Außenbehälter 1 auf. Dieser hat einen Boden 2, vier Seitenwände 3 und einen Deckel 4. Grundsätzlich können auch mehrere Deckel vorgesehen sein, beispielsweise für jede Seitenwand ein dort angelenkter Deckel, so wie im eingangs erläuterten Stand der Technik dargestellt. Im hier dargestellten und bevorzugten Ausführungsbeispiel ist aber nur ein einziger Deckel 4 vorgesehen, der hier an der in Fig. 1 links hinten liegenden Seitenwand 3 schwenkbar angelenkt ist, und zwar durch eine materialmäßige Ausgestaltung nach Art eines Filmscharniers.

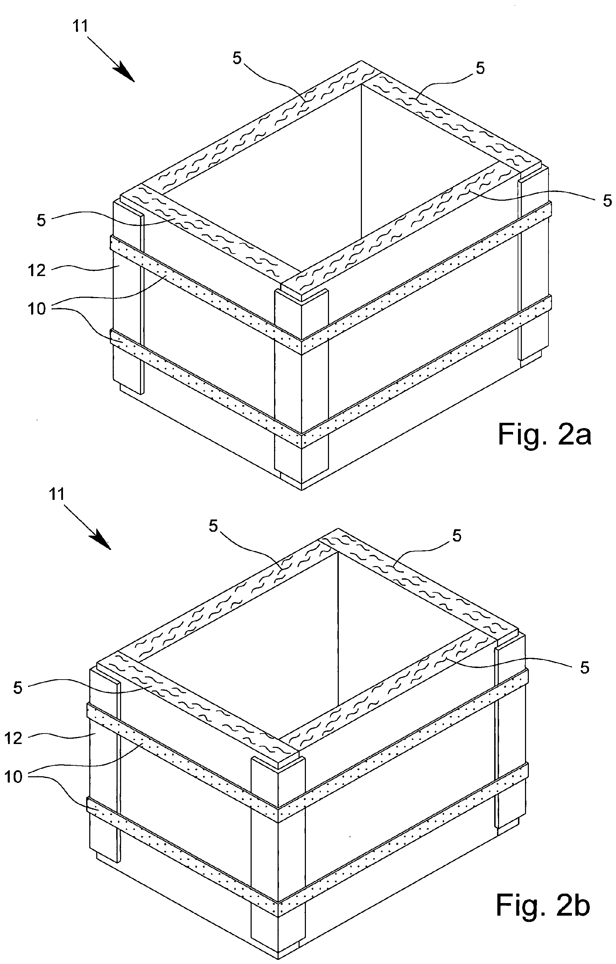

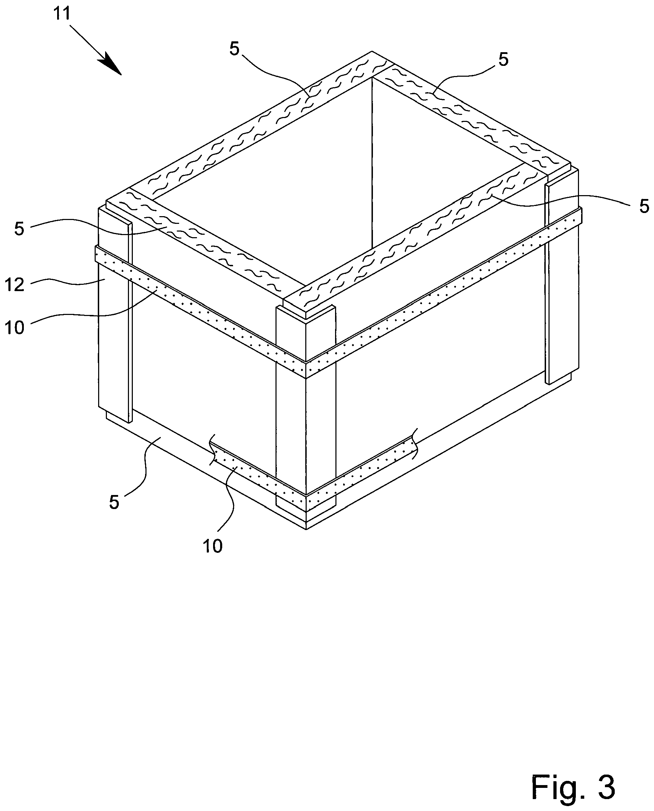

Fig. 3 zeigt, in Verbindung mit Fig. 2, dass sich im Außenbehälter 1 an den Seitenwänden 3 flächendeckend angeordnete, plattenförmige Vakuumisolationspaneele 5 befinden.

Mit Hilfe der Vakuumisolationspaneele 5 wird der in Fig. 3 erkennbare freie Innenraum des kastenförmigen Transportbehälters nach außen hin wärmegedämmt. Man kann im Innenraum des Transportbehälters weitere Elemente einsetzen, insbesondere Latentwärmespeicherelemente, die die Temperatur im Innenraum des Transportbehälters langfristig auf einer definierten Temperatur bzw. in einer definierten Temperaturspanne halten (siehe z.B. die WO 2008/137883 A1). Auf die Darstellung dieser Latentwärmespeicherelemente wird hier verzichtet, dazu darf umfassend auf den Stand der Technik verwiesen werden.

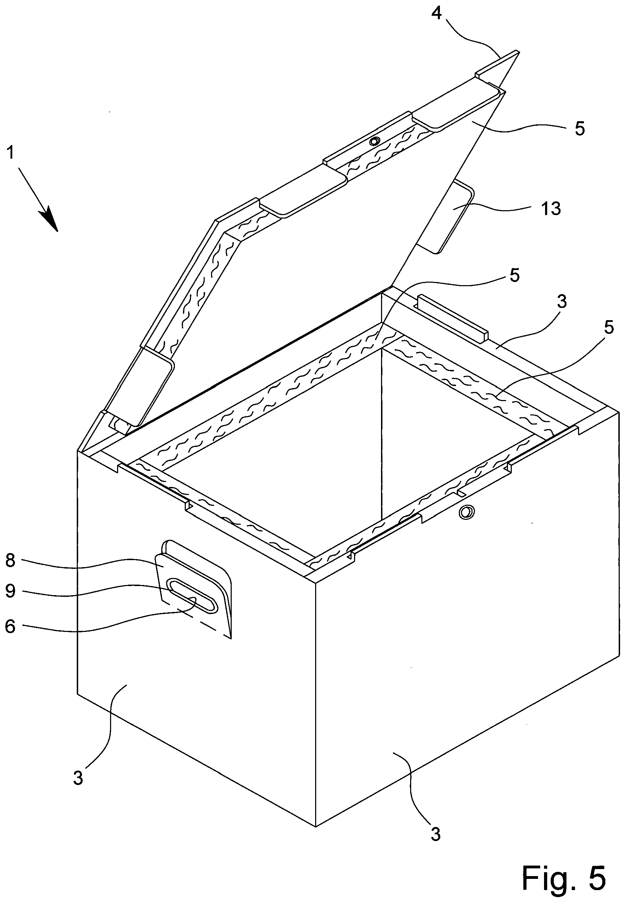

Fig. 1 und 5 zeigen nun im Zusammenhang, dass hier in zwei einander gegenüber angeordneten Seitenwänden 3 jeweils eine Trageöffnung 6 zum Eingreifen mit der Hand, um den Transportbehälter zu tragen, vorgesehen ist. Das Material der Seitenwände 3 ist oberhalb und seitlich der Trageöffnung 6 derart geschwächt, dass es vom umgebenden Material der Seitenwand 3 leicht trennbar und mitsamt der Trageöffnung 6 aus der Seitenwand 3 herausklappbar ist. Das Material der Seitenwand 3 ist oberhalb und seitlich der jeweiligen Trageöffnung 6 dadurch geschwächt, dass sich dort im Material der entsprechenden Seitenwand 3 eine Perforationslinie 7 befindet (Fig. 1). Greift man mit der Hand in die Trageöffnung 6 ein, so kann man mit einem kräftigen Ruck das Material der Seitenwand 3 in diesem Abschnitt vom Material der Seitenwand 3 im Übrigen lösen und die so gebildete Lasche 8 mitsamt der Trageöffnung 6 aus der Seitenwand 3 im Übrigen herausklappen (Fig. 3). Auf diese Weise kann man an diesen Laschen 8 auf den beiden einander gegenüberliegenden Seiten des Transportbehälters den Transportbehälter insgesamt komfortabel tragen. Wie bereits im allgemeinen Teil der Beschreibung angemerkt worden ist, kann man die Trageöffnungen 6 auch an anderen Stellen und in größerer Anzahl vorsehen.

Fig. 1 und 5 lassen im Zusammenhang erkennen, dass im dargestellten Ausführungsbeispiel die Trageöffnung 6 mit einer umlaufenden Öffnungsverstärkung 9, insbesondere einer Öffnungsverstärkung 9 aus Kunststoff, versehen ist. Derartige Öffnungsverstärkungen 9 sind für sich bekannt, insbesondere aus dem Gebiet der Transportverpackungen, wie Umzugskartons etc.

Man sieht in Fig. 2a, dass die plattenförmigen Vakuumisolationspaneele 5 der Seitenwände 3 quaderförmig mit glatten Rändern ausgeführt und umlaufend jeweils an einem Rand stumpf anstoßend, am anderen Rand frei vorstehend angeordnet sind. Die entsprechende Anordnung sieht man auch in Fig. 5.

Fig. 2b zeigt eine Anordnung, bei der die plattenförmigen Vakuumisolationspaneele 5 der Seitenwände 3 paarweise einander gegenüber entweder mit beiden Rändern stumpf anstoßend (in Fig. 2b die links hinten und rechts vorne befindlichen Vakuumisolationspaneele 5) oder mit beiden Rändern frei vorstehend (in Fig. 2b die rechts hinten und links vorne befindlichen Seitenwände 3) angeordnet sind. Bei dieser Anordnung ist allerdings die gegenseitige Fixierung der Vakuumisolationspaneele 5 nicht ganz so günstig wie bei Fig. 2a.

Eine alternative Anordnung, die ebenfalls aus dem Stand der Technik bekannt ist, besteht darin, dass die plattenförmigen Vakuumisolationspaneele 5 der Seitenwände 3 quaderförmig, aber mit auf 45° Gehrung angeschrägten Rändern ausgeführt und aneinander auf Gehrung anstoßend angeordnet sind

Das in Fig. 2 dargestellte bevorzugte Ausführungsbeispiel zeigt die Lehre der Erfindung. Für alle Varianten der Zusammenstellung von Vakuumisolationspaneelen 5 ist hier vorgesehen, dass die so angeordneten Vakuumisolationspaneele 5 der Seitenwände 3 mit mindestens einem umlaufenden Spannband 10. vorzugsweise mit zwei beabstandet zueinander angeordneten umlaufenden Spannbändern 10, in ihrer gegenseitigen Relativlage fixiert und so als zusammenhängender rahmenartiger Einsatz 11 für den Außenbehälter 1 handhabbar sind. In Fig. 2a, b sieht man jeweils diesen eigenständigen rahmenartigen Einsatz 11. Dieser ist insgesamt für sich handhabbar und wird, wie Fig. 5 zeigt, von oben in den offenen kastenförmigen Außenbehälter 1 eingeschoben.

Grundsätzlich gilt, dass die rahmenartig angeordneten, miteinander zusammengestellten Vakuumisolationspaneele 5 mit mindestens einem Spannmittel 10 in ihrer gegenseitigen Relativlage fixiert und so als zusammenhängender rahmenartiger Einsatz 11 für den Außenbehälter 1 handhabbar sind. Vorzugsweise arbeitet man mit zwei beabstandet zueinander angeordneten Spannmitteln 10. Anstelle der in der Zeichnung dargestellten Spannbänder 10 kann man als Spannmittel auch Spannseile, U-förmige Spannklammern eine auf die Vakuumisolationspaneele 5 aufgeschrumpfte Schrumpffolie oder eine Umschäumung aus schäumbarem Kunststoff, insbesondere aus Polyurethan, vorsehen. Bei Vorhandensein mehrerer Spannmittel lassen sich optional auch verschiedene Typen von Spannmitteln miteinander kombinieren.

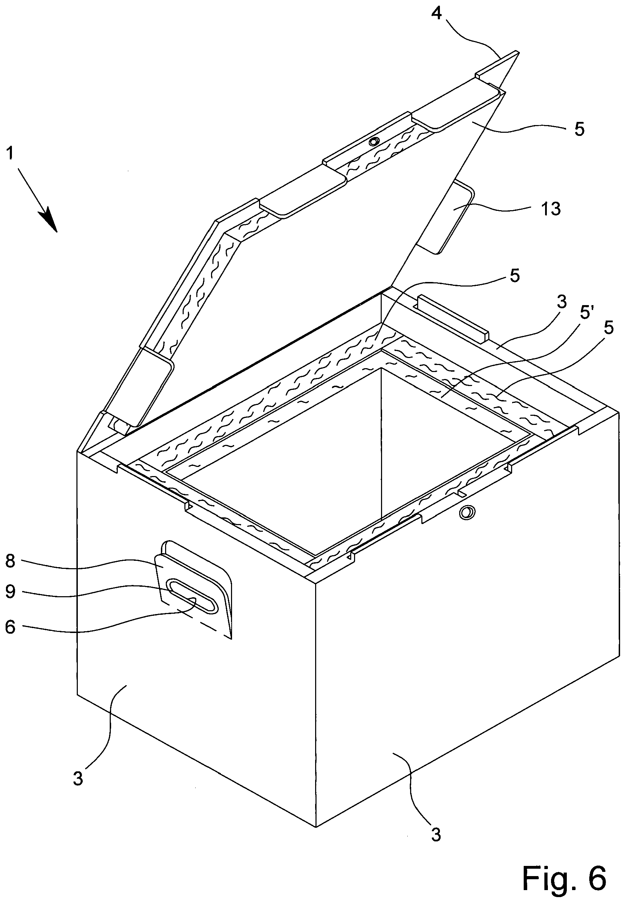

Zweckmäßig ist es, wenn Spannmittel 10 nahe den umlaufenden Rändern der Vakuumisolationspaneele 5 angeordnet sind. Fig. 6 zeigt insoweit eine bevorzugte Modifikation des Ausführungsbeispiels von Fig. 5 dergestalt, dass dort, wo außenseitig ein Spannmittel 10 nahe einem der umlaufenden Ränder der Vakuumisolationspaneele 5 angeordnet ist, an der Innenseite der Vakuumisolationspaneele 5 ein steifer Stützrahmen 5' angeordnet ist, der als Widerlager für die von dem hier angeordneten Spannmittel 10 von außen aufgebrachten Kräfte wirkt.

Nach bevorzugter Ausführung, deren Bedeutung im allgemeinen Teil der Beschreibung dargelegt worden ist, ist hier weiter vorgesehen, dass die Kanten der Vakuumisolationspaneele 5 mit Kantenschutzelementen 12, vorzugsweise aus Kunststoff, geschützt sind. Bei den Kantenschutzelementen 12 handelt es sich hier um winkelförmig gestaltete Schienen aus Pappe oder Kunststoff, die die Außenkanten der Vakuumisolationspaneele 5 schützen, weil sie zwischen den Vakuumisolationspaneelen 5 und den Spannmitteln 10 angeordnet sind. Die zwei hier mit Abstand übereinander angeordneten Spannbänder 10 können also stramm gespannt werden. Die Vakuumisolationspaneele 5 werden an ihren Rändern stramm aufeinander gedrückt. Die dortigen Spalte werden so eng wie möglich, die dort bestehenden Wärmebrücken werden weitestgehend reduziert. Entsprechende Anordnungen gelten auch für die anderen Arten von Spannmitteln 10.

Fig. 1 und 5 zeigen, dass am Deckel 4 ein Vakuumisolationspaneel 5 in seiner zu den Vakuumisolationspaneelen 5 der Seitenwände 3 passenden Lage fest angebracht ist. Man sieht, wie das Vakuumisolationspaneel 5 am Deckel 4 dann von selbst die richtige Lage auf den Vakuumisolationspaneelen 5 der Seitenwände 3 findet, wenn der Deckel 4 in seine vorgesehene Schließlage bewegt wird. Im in Fig. 5 dargestellten Ausführungsbeispiel ist das Vakuumisolationspaneel 5 am Deckel 4 beispielsweise mit Hilfe eines doppelseitigen Klebebands angeklebt. Man das auch entsprechend mit Klettband machen.

Selbstverständlich ist davon auszugehen, dass am Boden 2 des Außenbehälters 1 ein Vakuumisolationspaneel 5 in seiner zu den Vakuumisolationspaneelen 5 der Seitenwände 3 passenden Lage eingelegt und vorzugsweise fest angebracht ist. Hinsichtlich des bodenseitigen Vakuumisolationspaneels 5 zeigt insoweit Fig. 3 ein Ausführungsbeispiel. Dort ist vorgesehen, dass das dem Boden 2 zugeordnete Vakuumisolationspaneel 5 unter den Vakuumisolationspaneelen 5 der Seitenwände 3 angeordnet ist und in seiner Länge und Breite der Außenlänge und Außenbreite der zusammengestellten Vakuumisolationspaneele 5 der Seitenwände 3 entspricht oder, vorzugsweise geringfügig größer bemessen ist. Die Vakuumisolationspaneele 5 der Seitenwände 3 sind dabei so angeordnet wie in Fig. 2a vorgesehen. Die Kantenschutzelemente 12 sind, gleiche Abmessungen der Vakuumisolationspaneele 5 der Seitenwände 3 vorausgesetzt, etwas länger als in Fig. 2a. Es ist nämlich vorgesehen, dass die Kantenschutzelemente 12 sich bis auf das dem Boden 2 zugeordnete Vakuumisolationspaneel 5 erstrecken, so dass das dem Boden 2 zugeordnete Vakuumisolationspaneel 5 gemeinsam mit den Vakuumisolationspaneelen 5 der Seitenwände 3 verspannt ist. Das unten liegende Spannband 10 ist so positioniert, dass es hinreichenden Druck auch auf den Rand des bodenseitigen Vakuumisolationspaneels 5 auszuüben vermag. In der Darstellung ist das Spannband 10 abgebrochen, um die darunter liegende Anordnung des bodenseitigen Vakuumisolationspaneels 5 erkennbar zu machen. Selbstverständlich läuft dieses Spannband 10 in der Praxis genau so um wie das obere Spannband 10.

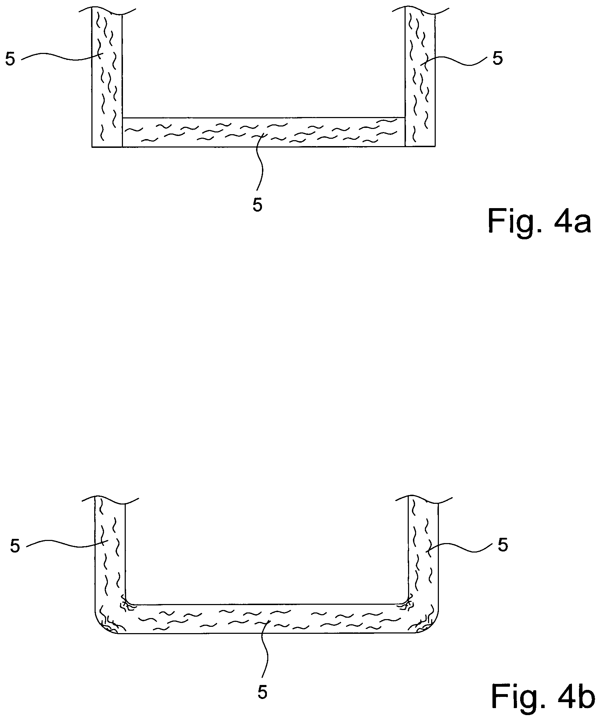

Anhand von Fig. 4a lässt sich eine Alternative für die Anordnung des bodenseitigen Vakuumisolationspaneels 5 nachvollziehen. Hier ist vorgesehen, dass das dem Boden 2 zugeordnete Vakuumisolationspaneel 5 innerhalb der Vakuumisolationspaneele 5 der Seitenwände 3 angeordnet und in seiner Länge und Breite der freien Innenlänge und Innenbreite der zusammengestellten Vakuumisolationspaneele 5 der Seitenwände 3 entspricht oder, vorzugsweise, geringfügig größer bemessen ist.

In Fig. 4b sieht man eine weitere Variante, bei der das bodenseitige Vakuumisolationspaneel 5 zusammen mit zwei Seitenwänden 3 zugeordneten Vakuumisolationspaneelen 5 zu einem großen, zweifach abgeknickten Vakuumisolationspaneel 5 in U-Form verbunden ist. Derartige U-förmige Anordnungen von Vakuumisolationspaneelen 5 sind aus der Praxis bekannt und können hier unter Umständen auch eingesetzt werden.

Ein geringfügiges Übermaß des bodenseitigen Vakuumisolationspaneels 5, hier reicht regelmäßig schon ein Übermaß im Millimeterbereich, lässt erwarten, dass die Wärmebrücken bildenden Spalte durch den aufbringbaren Anpressdruck weitgehend reduziert werden.

Eine weitere Verbesserung erreicht man evtl. mit entsprechenden Dichtungsstreifen an passenden Flächen der aneinander zur Anlage kommenden Vakuumisolationspaneele 5. Das ist in dem Ausführungsbeispiel nicht im Detail dargestellt.

Ebenfalls aus Fig. 1 und Fig. 5 im Zusammenhang kann man ferner entnehmen, dass im dargestellten und bevorzugten Ausführungsbeispiel der Deckel 4 mit seitlichen Führungslaschen 13 versehen ist, die beim Schließen des Deckels 4 in Führungen der angrenzenden Seitenwände 3 des Außenbehälters 1 eintauchen. Dadurch ergibt sich eine präzise Positionierung des Deckels 4 auf den Seitenwänden 3 des Außenbehälters 1 des kastenförmigen Transportbehälters gemäß der Erfindung.

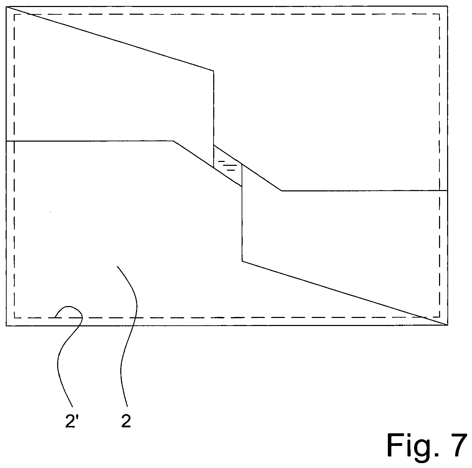

Bei faltbaren Außenbehältern 1 kann man auch den Boden 2 faltbar vorsehen, insbesondere in Form eines automatisch einfaltenden Bodens 2, eines Automatikbodens. In einer Ansicht des Außenbehälters 1 von unten kann man den Boden 2 erkennen (Fig. 7). Bei einem Automatikboden ergibt sich unvermeidbar im Mittelbereich eine verbleibende Öffnung. Diese ist im dargestellten Ausführungsbeispiel dadurch unschädlich gemacht, dass der Boden 2 des kastenförmigen Außenbehälters 1 auf der Innenseite mit einer zusätzlichen Schutzlage 2' abgedeckt ist. Die Schutzlage 2' lässt sich durch eine eingelegte dünne Platte realisieren. Sie kann aber auch durch einklappbare, dann aber zweckmäßigerweise asymmetrisch bemessene Laschen realisiert werden.

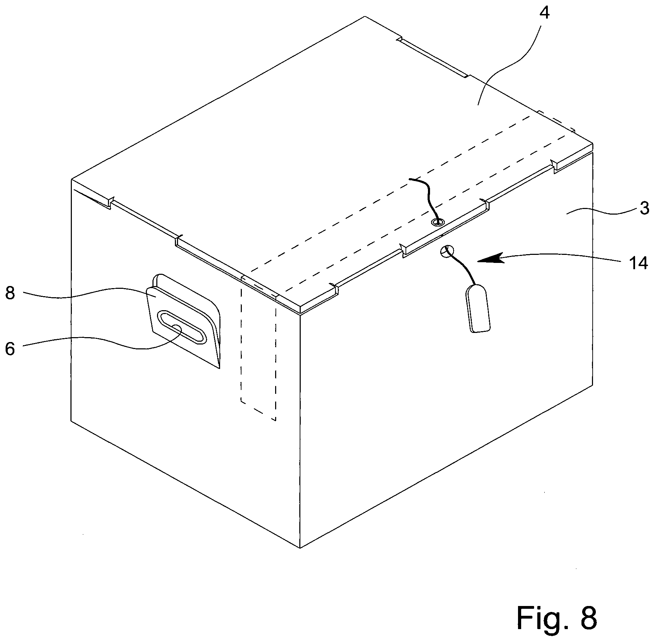

Fig. 8 zeigt den kastenförmigen Transportbehälter nun in komplett geschlossenem Zustand. Da der Deckel 4 das Vakuumisolationspaneel 5 trägt, kann man durch festes Verspannen des Deckels 4 mit den Seitenwänden 3 das Vakuumisolationspaneel 5 am Deckel 4 auf die stumpfen Ränder der Vakuumisolationspaneele 5 an den Seitenwänden 3 drücken. Das ist in Fig. 4 durch ein gestrichelt dargestelltes Klebeband angedeutet. Spannt man dieses straff über den Deckel 4, so hat man auch insoweit geringste Spalte zwischen den Vakuumisolationspaneelen 5 zum Deckel 4 hin.

Um den Spanneffekt des Deckels 4 zu optimieren, ist im dargestellten und bevorzugten Ausführungsbeispiel vorgesehen, dass die Außenabmessungen der Vakuumisolationspaneele 5 im Verhältnis zu den Innenabmessungen des kastenförmigen Außenbehälters 1 derart geringfügig größer bemessen sind, dass die Vakuumisolationspaneele 5 bei stramm geschlossenem Deckel 4 aneinander angepresst sind. Auch in diesem Zusammenhang gilt, dass ein Übermaß sehr gering ausfallen kann. Regelmäßig reicht ein Übermaß im Millimeterbereich.

Ferner zeigt Fig. 8 eine Besonderheit dergestalt, dass der Deckel 4 an einer Seitenwand 3 über ein nicht ohne Zerstörung lösbares Scharnier schwenkbar angelenkt und an der gegenüberliegenden Seitenwand 3 mittels einer Plombenverbindung 14 nicht ohne Zerstörung lösbar fixierbar ist. Auf diese Weise kann der kastenförmige Transportbehälter auch für den Transport zu sichernder Güter verwendet werden, beispielsweise zum Transport von Organen zum Zwecke der Transplantation etc. Wie bereits im allgemeinen Teil der Beschreibung angesprochen worden ist, ist unter einer "Plombenverbindung" jede Sicherung gegen Öffnung ohne Zerstörung, also jede Form von Siegel, zu verstehen.

Aus ökonomischen Gründen empfiehlt es sich, dass der kastenförmige Außenbehälter 1 aus Pappe, insbesondere aus Wellpappe besteht. Das Außenvolumen ist damit so gering wie möglich. Das Gewicht ist gering und die Kosten sind günstig. Die Vakuumisolationspaneele 5 im Inneren, die zu dem erfindungsgemäßen Einsatz 11 zusammengespannt sind, führen zu der gleichwohl vorzüglichen Isolationswirkung des kastenförmigen Transportbehälters.

Aus transporttechnischen Gründen kann es sich allerdings auch empfehlen, den kastenförmigen Außenbehälter 1 aus einem Wellkunststoff bzw. aus dünnen Hohlkammerplatten/Stegplatten herzustellen. Damit wird der kastenförmige Außenbehälter 1 unempfindlich gegenüber Feuchtigkeit und ist damit für beim Transport häufig auftretende Umweltbedingungen besser geeignet. Man kann auch Kombinationen verschiedener Werkstoffe einsetzen, bis hin zu Kombinationen von Pappe, Kunststoff und Metall zur Optimierung der Gesamtkonstruktion.

Versuche haben gezeigt, dass man mit den Spannmitteln 10. insbesondere den Spannbändern 10. zur Bildung des Einsatzes 11 aus den Vakuumisolationspaneelen 5 der Seitenwände 3 eine Verringerung der Wärmeverluste aus dem Innenraum des Transportbehälters um ca. 10% erreicht, weil die Wärmebrücken weitestgehend unschädlich gemacht werden. Eine vergleichbare Verbesserung bzgl. der Wärmeverluste, nämlich eine Verringerung um ebenfalls etwa 10% gegenüber einem Ausgangswert erreicht man, wenn man den Deckel 4 mit dem dortigen Vakuumisolationspaneel 5 hinreichend fest auf die Vakuumisolationspaneele 5 des Einsatzes 11 drückt.

Für die Abmessungen der Vakuumisolationspaneele 5 ergeben sich Werte für die Dicke von bevorzugt mindestens 10mm bis zu ca. 80mm, vorzugsweise von 30 mm bis 60 mm.

Gegenstand der Erfindung ist auch ein Einsatz 11 aus zusammengespannten Vakuumisolationspaneelen 5 für sich, der auch in andere Außenbehälter 1, beispielsweise Außenbehälter 1 aus Kunststoff oder nochmals für sich isolierte Außenbehälter einsetzbar ist Für diesen Einsatz 11 aus zusammengespannten Vakuumisolationspaneelen 5 für sich gelten die Erläuterungen, die oben zu Fig. 2a, b, Fig. 3 und Fig. 4a, b gegeben worden sind, in entsprechender Weise.

## Patentansprüche

1. Kastenförmiger Transportbehälter
mit einem kastenförmigen Außenbehälter (1) mit einem Boden (2), vier Seitenwänden (3) und mindestens einem Deckel (4), wobei der Deckel (4) vorzugsweise an einer Seitenwand (3) schwenkbar angelenkt ist, und
mit im Außenbehälter (1) an den Seitenwänden (3) flächendeckend angeordneten plattenförmigen Vakuumisolationspaneelen (5), wobei die plattenförmigen Vakuumisolationspaneele (5) der Seitenwände (3) quaderförmig mit glatten Rändern ausgeführt und paarweise einander gegenüber entweder mit beiden Rändern stumpf anstoßend oder mit beiden Rändern frei vorstehend angeordnet sind, und/oder
quaderförmig mit glatten Rändern ausgeführt und umlaufend jeweils an einem Rand stumpf anstoßend, am anderen Rand frei vorstehend angeordnet sind, und/oder
quaderförmig, mit auf 45° Gehrung angeschrägten Rändern ausgeführt und aneinander auf Gehrung anstoßend angeordnet sind, und **dadurch gekennzeichnet, dass** die so angeordneten Vakuumisolationspaneele (5) der Seitenwände (3) mit mindestens einem Spannmittel (10), vorzugsweise mit zwei beabstandet zueinander angeordneten Spannmittel (10), in ihrer gegenseitigen Relativlage fixiert und so als zusammenhängender rahmenartiger Einsatz (11) für den Außenbehälter (1) handhabbar sind.

2. Transportbehälter nach Anspruch 1, **dadurch gekennzeichnet,**
**dass** jeweils ein Spannmittel (10) nahe einem der umlaufenden Ränder der Vakuumisolationspaneele (5) angeordnet ist, und/oder
**dass** dort, wo außenseitig ein Spannmittel (10) nahe einem der umlaufenden Ränder der Vakuumisolationspaneele (5) angeordnet ist, an der Innenseite der Vakuumisolationspaneele (5) ein steifer Stützrahmen (5') angeordnet ist, der als Widerlager für die von dem hier angeordneten Spannmittel (10) von außen aufgebrachten Kräfte wirkt, und/oder
**dass** das Spannmittel (10) ein um die Vakuumisolationspaneele (5) der Seitenwände (3) umlaufendes Spannband (10) oder Spannseil, eine U-förmige Spannklammer, eine auf die Vakuumisolationspaneele (5) aufgeschrumpfte Schrumpffolie oder eine Umschäumung aus schäumbarem Kunststoff, insbesondere aus Polyurethan, ist, wobei optional verschiedene Typen von Spannmitteln (10) miteinander kombiniert einsetzbar sind.

3. Transportbehälter nach Anspruch 1 oder 2, **dadurch gekennzeichnet,**
**dass** die Kanten der Vakuumisolationspaneele (5) mit Kantenschutzelementen (12), vorzugsweise aus Kunststoff, geschützt sind, die zwischen den Vakuumisolationspaneelen (5) und dem Spannmittel (10) oder den Spannmitteln (10) angeordnet sind.

4. Transportbehälternach einem der Ansprüche 1 bis 3, **dadurch gekennzeichnet,**
**dass** am Deckel (4) ein Vakuumisolationspaneel (5) in seiner zu den Vakuumisolationspaneelen (5) der Seitenwände (3) passenden Lage fest angebracht, insbesondere angeklebt oder mit Klettband fixiert, ist.

5. Transportbehälter nach einem der Ansprüche 1 bis 4, **dadurch gekennzeichnet,**
**dass** am Boden (2) des Außenbehälters (1) ein Vakuumisolationspaneel (5) in seiner zu den Vakuumisolationspaneelen (5) der Seitenwände (3) passenden Lage eingelegt und vorzugsweise fest angebracht ist.

6. Transportbehälter nach Anspruch 5, **dadurch gekennzeichnet,**
**dass** das dem Boden (2) zugeordnete Vakuumisolationspaneel (5) unter den Vakuumisolationspaneelen (5) der Seitenwände (3) angeordnet ist und in seiner Länge und Breite der Außenlänge und Außenbreite der zusammengestellten Vakuumisolationspaneele (5) der Seitenwände (3) entspricht oder, vorzugsweise, geringfügig größer bemessen ist.

7. Transportbehälter nach den Ansprüchen 3 und 6, **dadurch gekennzeichnet,**
**dass** die Kantenschutzelemente (12) sich bis auf das dem Boden (2) zugeordnete Vakuumisolationspaneel (5) erstrecken, so dass das dem Boden (2) zugeordnete Vakuumisolationspaneel (5) gemeinsam mit den Vakuumisolationspaneelen (5) der Seitenwände (3) verspannt ist.

8. Transportbehälter nach Anspruch 5, **dadurch gekennzeichnet,**
**dass** das dem Boden (2) zugeordnete Vakuumisolationspaneel (5) innerhalb der Vakuumisolationspaneele (5) der Seitenwände (3) angeordnet und in seiner Länge und Breite der freien Innenlänge und Innenbreite der zusammengestellten Vakuumisolationspaneele (5) der Seitenwände (3) entspricht oder, vorzugsweise, geringfügig größer bemessen ist.

9. Transportbehälter nach einem der Ansprüche 1 bis 8, **dadurch gekennzeichnet,**
**dass** der Deckel (4) mit seitlichen Führungslaschen (13) versehen ist, die beim Schließen des Deckels (4) in Führungen der angrenzenden Seitenwände (3) des Außenbehälters (1) eintauchen.

10. Transportbehälternach einem der Ansprüche 1 bis 9, **dadurch gekennzeichnet,**
**dass** die Außenabmessungen der Vakuumisolationspaneele (5) im Verhältnis zu den Innenabmessungen des kastenförmigen Außenbehälters (1) zumindest in der Höhe derart geringfügig größer bemessen sind, dass die Vakuumisolationspaneele (5) bei stramm geschlossenem Deckel (4) aneinander angepresst sind, und/oder dass die einen Spalt definierenden Ränder oder Flächen der Vakuumisolationspaneele (5) mit zusätzlichen Dichtungsmitteln, insbesondere mit Dichtungsflächen oder Dichtungsstreifen, versehen sind.

11. Transportbehälter nach einem der Ansprüche 1 bis 10, **dadurch gekennzeichnet,**
**dass** der kastenförmige Außenbehälter (1) aus Pappe, insbesondere aus Wellpappe, aus Kunststoff, insbesondere aus Hohlkammer-Kunststoffplatten, oder aus einer Kombination dieser Materialien, besteht, und/oder
**dass** ein Vakuumisolationspaneel (5) aus mehreren einzelnen, bündig aneinander angrenzenden, kleineren Vakuumisolationspaneelen (5) besteht, und/oder dass der Boden (2) des kastenförmigen Außenbehälters (1) als von selbst einfaltender Boden ausgeführt ist und dass der Boden (2) des Außenbehälters (1) auf der Innenseite mit einer zusätzlichen Schutzlage (2') abgedeckt ist.

12. Zusammenhängender, rahmenartiger Einsatz für einen kastenförmigen Außenbehälter eines insgesamt kastenförmigen Transportbehälters,
wobei der Einsatz (11) plattenförmige Vakuumisolationspaneele (5) aufweist, die quaderförmig mit glatten Rändern ausgeführt und paarweise einander gegenüber entweder mit beiden Rändern stumpf anstoßend oder mit beiden Rändern frei vorstehend angeordnet sind, und/oder
quaderförmig mit glatten Rändern ausgeführt und umlaufend jeweils an einem Rand stumpf anstoßend, am anderen Rand frei vorstehend angeordnet sind, und/oder
quaderförmig, aber mit auf 45° Gehrung angeschrägten Rändern ausgeführt und aneinander auf Gehrung anstoßen angeordnet sind, und
wobei die so angeordneten Vakuumisolationspaneele (5) mit mindestens einem Spannmittel (10), vorzugsweise mit zwei beabstandet zueinander angeordneten Spannmitteln (10), in ihrer gegenseitigen Relativlage fixiert sind.

13. Einsatz nach Anspruch 12, **dadurch gekennzeichnet,**
**dass** jeweils ein Spannmittel (10) nahe einem der umlaufenden Ränder der Vakuumisolationspaneele (5) angeordnet ist, und/oder
**dass** dort, wo außenseitig ein Spannmittel (10) nahe einem der umlaufenden Ränder der Vakuumisolationspaneele (5) angeordnet ist, an der Innenseite der Vakuumisolationspaneele (5) ein steifer Stützrahmen (5') angeordnet ist, der als Widerlager für die von dem hier angeordneten Spannmittel (10) von außen aufgebrachten Kräfte wirkt, und/oder
**dass** das Spannmittel (10) ein um die Vakuumisolationspaneele (5) der Seitenwände (3) umlaufendes Spannband (10) oder Spannseil, eine U-förmige Spannklammer, eine auf die Vakuumisolationspaneele (5) aufgeschrumpfte Schrumpffolie oder eine Umschäumung aus schäumbarem Kunststoff, insbesondere aus Polyurethan, ist, wobei optional verschiedene Typen von Spannmitteln (10) miteinander kombiniert einsetzbar sind.

14. Einsatz nach Anspruch 12 oder 13, **dadurch gekennzeichnet,**
**dass** die Kanten der Vakuumisolationspaneele (5) mit Kantenschutzelementen (12), vorzugsweise aus Kunststoff, geschützt sind, die zwischen den Vakuumisolationspaneelen (5) und dem Spannmittel (10) oder den Spannmitteln (10) angeordnet sind,
wobei, vorzugsweise, ein dem Boden (2) zugeordnetes Vakuumisolationspaneel (5) unter den Vakuumisolationspaneelen (5) der Seitenwände (3) angeordnet ist und in seiner Länge und Breite der Außenlänge und Außenbreite der zusammengestellten Vakuumisolationspaneele (5) der Seitenwände (3) entspricht oder, vorzugsweise geringfügig größer bemessen ist und
die Kantenschutzelemente (12) sich bis auf das dem Boden (2) zugeordnete Vakuumisolationspaneel (5) erstrecken, so dass das dem Boden (2) zugeordnete Vakuumisolationspaneel (5) gemeinsam mit den Vakuumisolationspaneelen (5) der Seitenwände (3) verspannt ist.

15. Einsatz nach einem der Ansprüche 12 bis 14, **dadurch gekennzeichnet,**
**dass** ein dem Boden (2) zugeordnete Vakuumisolationspaneel (5) innerhalb der Vakuumisolationspaneele (5) der Seitenwände (3) angeordnet und in seiner Länge und Breite der freien Innenlänge und Innenbreite der zusammengestellten Vakuumisolationspaneele (5) der Seitenwände (3) entspricht oder, vorzugsweise, geringfügig größer bemessen ist.

## Claims

1. Box-type transport container
having a box-type outer container (1) with a bottom (2), four side walls (3) and at least one cover (4), wherein the cover (4) is preferably pivotally attached to a side wall (3), and
having sheet-type vacuum insulation panels (5) arranged in the outer container (1) so as to cover the surface of the side walls (3),
wherein
the sheet-type vacuum insulation panels (5) of the side walls (3) are of cuboidal design with smooth edges and are arranged in pairs opposite one another, either with both edges abutting or with both edges projecting freely, and/or
are of cuboidal design with smooth edges and, circumferentially, are each arranged so as to abut at one edge and to project freely at the other edge, and/or
are of cuboidal design with edges mitered at 45° and arranged so as to form an abutting miter joint, and **characterized**
**in that** the vacuum insulation panels (5), arranged in this way, of the side walls (3) are fixed in their position relative to one another by means of at least one tension means (10), preferably by means of two tension means (10) arranged spaced apart, and can thus be handled as a coherent frame-type insert (11) for the outer container (1).

2. Transport container according to Claim 1, **characterized**
**in that** one tension means (10) in each case is arranged close to one of the peripheral edges of the vacuum insulation panels (5), and/or
**in that** a stiff supporting frame (5') is arranged on the inside of the vacuum insulation panels (5) where a tension means (10) is arranged on the outside close to one of the peripheral edges of the vacuum insulation panels (5), said frame acting as an abutment for the forces applied externally by the tension means (10) arranged here, and/or
**in that** the tension means (10) is a tension strap (10) or tension cable running around the vacuum insulation panels (5) of the side walls (3), a U-shaped clamp, a shrink film shrunk onto the vacuum insulation panels (5) or a foamed sheath composed of foamable plastic, in particular of polyurethane, wherein it is optionally possible to use different types of tension means (10) in combination.

3. Transport container according to Claim 1 or 2, **characterized**
**in that** the corners of the vacuum insulation panels (5) are protected by corner protection elements (12), preferably made of plastic, which are arranged between the vacuum insulation panels (5) and the one or more tension means (10).

4. Transport container according to one of Claims 1 to 3, **characterized**
**in that** a vacuum insulation panel (5) is firmly attached, in particular adhesively bonded or fixed by means of hook-and-loop tape, to the cover (4) in its position matching the vacuum insulation panels (5) of the side walls (3).

5. Transport container according to one of Claims 1 to 4, **characterized**
**in that** a vacuum insulation panel (5) is inserted and preferably firmly attached at the bottom (2) of the outer container (1) in its position matching the vacuum insulation panels (5) of the side walls (3).

6. Transport container according to Claim 5, **characterized**
**in that** the vacuum insulation panel (5) associated with the bottom (2) is arranged under the vacuum insulation panels (5) of the side walls (3) and corresponds in length and width to the external length and external width of the assembled vacuum insulation panels (5) of the side walls (3) or, preferably, is of slightly larger dimensions.

7. Transport container according to Claims 3 and 6, **characterized**
**in that** the corner protection elements (12) extend as far as the vacuum insulation panel (5) associated with the bottom (2), with the result that the vacuum insulation panel (5) associated with the bottom (2) is clamped jointly with the vacuum insulation panels (5) of the side walls (3).

8. Transport container according to Claim 5, **characterized**
**in that** the vacuum insulation panel (5) associated with the bottom (2) is arranged inside the vacuum insulation panels (5) of the side walls (3) and corresponds in length and width to the free internal length and internal width of the assembled vacuum insulation panels (5) of the side walls (3) or, preferably, is of slightly larger dimensions.

9. Transport container according to one of Claims 1 to 8, **characterized**
**in that** the cover (4) is provided with lateral guide tabs (13), which enter guides on the adjoining side walls (3) of the outer container (1) as the cover (4) is closed.

10. Transport container according to one of Claims 1 to 9, **characterized**
**in that** the outside dimensions of the vacuum insulation panels (5) are made slightly larger than the inside dimensions of the box-type outer container (1), at least in height, in such a way that the vacuum insulation panels (5) are pressed against one another when the cover (4) is tightly closed, and/or
**in that** the edges or surfaces of the vacuum insulation panels (5), which edges or surfaces define a gap, are provided with additional sealing means, in particular with sealing surfaces or sealing strips.

11. Transport container according to one of Claims 1 to 10, **characterized**
**in that** the box-type outer container (1) is composed of paperboard, in particular of corrugated paperboard, of plastic, in particular of hollow-chamber plastic sheets, or of a combination of these materials, and/or in that a vacuum insulation panel (5) consists of a plurality of individual, smaller vacuum insulation panels (5) adjoining one another in such a way that they are flush and/or
**in that** the bottom (2) of the box-type outer container (1) is embodied as a self-folding bottom, and in that the bottom (2) of the outer container (1) is covered with an additional protective layer (2') on the inside.

12. Coherent frame-type insert for a box-type outer container of a transport container which is of a box type overall,
wherein the insert (11) has sheet-type vacuum insulation panels (5), which are of cuboidal design with smooth edges and are arranged in pairs opposite one another, either with both edges abutting or with both edges projecting freely, and/or
are of cuboidal design with smooth edges and, circumferentially, are each arranged so as to abut at one edge and to project freely at the other edge, and/or
are of cuboidal design but with edges mitered at 45° and arranged so as to form an abutting miter joint, and wherein the vacuum insulation panels (5) arranged in this way are fixed in their position relative to one another by means of at least one tension means (10), preferably by means of two tension means (10) arranged spaced apart.

13. Insert according to Claim 12, **characterized in that** one tension means (10) in each case is arranged close to one of the peripheral edges of the vacuum insulation panels (5), and/or
**in that** a stiff supporting frame (5') is arranged on the inside of the vacuum insulation panels (5) where a tension means (10) is arranged on the outside close to one of the peripheral edges of the vacuum insulation panels (5), said frame acting as an abutment for the forces applied externally by the tension means (10) arranged here, and/or
**in that** the tension means (10) is a tension strap (10) or tension cable running around the vacuum insulation panels (5) of the side walls (3), a U-shaped clamp, a shrink film shrunk onto the vacuum insulation panels (5) or a foam sheath composed of foamable plastic, in particular of polyurethane, wherein it is optionally possible to use different types of tension means (10) in combination.

14. Insert according to Claim 12 or 13, **characterized in that** the corners of the vacuum insulation panels (5) are protected by corner protection elements (12), preferably made of plastic, which are arranged between the vacuum insulation panels (5) and the one or more tension means (10),
wherein, preferably, a vacuum insulation panel (5) associated with the bottom (2) is arranged under the vacuum insulation panels (5) of the side walls (3) and corresponds in length and width to the external length and external width of the assembled vacuum insulation panels (5) of the side walls (3) or, preferably, is of slightly larger dimensions, and
the corner protection elements (12) extend as far as the vacuum insulation panel (5) associated with the bottom (2), with the result that the vacuum insulation panel (5) associated with the bottom (2) is clamped jointly with the vacuum insulation panels (5) of the side walls (3).

15. Insert according to one of Claims 12 to 14, **characterized**
**in that** a vacuum insulation panel (5) associated with the bottom (2) is arranged inside the vacuum insulation panels (5) of the side walls (3) and corresponds in length and width to the free internal length and internal width of the assembled vacuum insulation panels (5) of the side walls (3) or, preferably, is of slightly larger dimensions.

## Revendications

1. Conteneur de transport en forme de caisse, comprenant
un conteneur extérieur (1) en forme de caisse avec un fond (2), quatre parois latérales (3) et au moins un couvercle (4), le couvercle (4) étant de préférence articulé de manière pivotante à une paroi latérale (3), et
des panneaux d'isolation sous vide (5) en forme de plaque disposés de manière à recouvrir la surface dans le conteneur extérieur (1) au niveau des parois latérales (3),
les panneaux d'isolation sous vide (5) en forme de plaque des parois latérales (3)
étant réalisés sous forme parallélépipédique avec des bords lisses et étant disposés par paires les uns en face des autres soit avec les deux bords en butée l'un contre l'autre soit avec les deux bords faisant saillie librement, et/ou
étant réalisés sous forme parallélépipédique avec des bords lisses et étant disposés sur la périphérie à chaque fois en butée bout-à-bout au niveau d'un bord, et librement en saillie au niveau de l'autre bord, et/ou
étant réalisés sous forme parallélépipédique avec des bords biseautés en onglet à 45° et étant disposés en butée l'un contre l'autre en onglet, et
**caractérisé en ce que**
les panneaux d'isolation sous vide ainsi disposés (5) des parois latérales (3) peuvent être fixés avec au moins un moyen de serrage (10), de préférence avec deux moyens de serrage (10) espacés l'un de l'autre, dans leur position relative mutuelle et peuvent ainsi être manipulés sous forme d'insert cohésif de type cadre (11) pour le conteneur extérieur (1).

2. Conteneur de transport selon la revendication 1, **caractérisé en ce qu'**à chaque fois un moyen de serrage (10) est disposé à proximité de l'un des bords périphériques des panneaux d'isolation sous vide (5), et/ou
**en ce que** là où, du côté extérieur, un moyen de serrage (10) est disposé à côté de l'un des bords périphériques des panneaux d'isolation sous vide (5), un cadre de support rigide (5') est disposé au niveau du côté intérieur des panneaux d'isolation sous vide (5), lequel agit en tant que butée pour les forces appliquées depuis l'extérieur par le moyen de serrage (10) disposé à cet endroit, et/ou
**en ce que** le moyen de serrage (10) est une bande de serrage (10), un câble de serrage, une pince de serrage en forme de U, une feuille rétractable appliquée de manière rétractable sur les panneaux d'isolation sous vide (5) ou un moussage en matière plastique pouvant être moussée, en particulier en polyuréthane, appliqué sur la périphérie des panneaux d'isolation sous vide (5) des parois latérales (3), différents types de moyens de serrage (10) pouvant en option être utilisés de manière combinée les uns avec les autres.

3. Conteneur de transport selon la revendication 1 ou 2, **caractérisé en ce que** les arêtes des panneaux d'isolation sous vide (5) sont protégées avec des éléments de protection d'arêtes (12), de préférence en plastique, qui sont disposés entre les panneaux d'isolation sous vide (5) et le moyen de serrage (10) ou les moyens de serrage (10).

4. Conteneur de transport selon l'une quelconque des revendications 1 à 3, **caractérisé en ce qu'**un panneau d'isolation sous vide (5) est monté fixement sur le couvercle (4) dans sa position ajustée aux panneaux d'isolation sous vide (5) des parois latérales (3), en particulier est collé ou fixé avec un ruban adhésif.

5. Conteneur de transport selon l'une quelconque des revendications 1 à 4, **caractérisé en ce que** un panneau d'isolation sous vide (5) est inséré et est de préférence monté fixement sur le fond (2) du conteneur extérieur (1) dans sa position ajustée aux panneaux d'isolation sous vide (5) des parois latérales (3).

6. Conteneur de transport selon la revendication 5, **caractérisé en ce que** le panneau d'isolation sous vide (5) associé au fond (2) est disposé sous les panneaux d'isolation sous vide (5) des parois latérales (3) et correspond, de par sa longueur et sa largeur, à la longueur extérieure et à la largeur extérieure des panneaux d'isolation sous vide assemblés (5) des parois latérales (3), ou de préférence est dimensionné de manière légèrement plus grande.

7. Conteneur de transport selon les revendications 3 et 6, **caractérisé en ce que** les éléments de protection des arêtes (12) s'étendent jusqu'au panneau d'isolation sous vide (5) associé au fond (2), de telle sorte que le panneau d'isolation sous vide (5) associé au fond (2) soit serré conjointement avec les panneaux d'isolation sous vide (5) des parois latérales (3).

8. Conteneur de transport selon la revendication 5, **caractérisé en ce que** le panneau d'isolation sous vide (5) associé au fond (2) est disposé à l'intérieur des panneaux d'isolation sous vide (5) des parois latérales (3) et correspond, de par sa longueur et sa largeur, à la longueur intérieure libre et à la largeur intérieure des panneaux d'isolation sous vide assemblés (5) des parois latérales (3), ou de préférence est dimensionné de manière légèrement plus grande.

9. Conteneur de transport selon l'une quelconque des revendications 1 à 8, **caractérisé en ce que** le couvercle (4) est pourvu de pattes de guidage latérales (13), qui, lors de la fermeture du couvercle (4), plongent dans des guides des parois latérales adjacentes (3) du conteneur extérieur (1).

10. Conteneur de transport selon l'une quelconque des revendications 1 à 9, **caractérisé en ce que** les dimensions extérieures des panneaux d'isolation sous vide (5), par rapport aux dimensions intérieures du conteneur extérieur en forme de caisse (1), sont dimensionnées au moins en hauteur, de manière légèrement plus grande, de telle sorte que les panneaux d'isolation sous vide (5), lorsque le couvercle (4) est fermé solidement, sont pressés les uns contre les autres, et/ou **en ce que** les bords ou les surfaces des panneaux d'isolation sous vide (5) définissant une fente sont pourvus de moyens d'étanchéité supplémentaires, en particulier de surfaces d'étanchéité ou de bandes d'étanchéité.

11. Conteneur de transport selon l'une quelconque des revendications 1 à 10, **caractérisé en ce que** le conteneur extérieur en forme de caisse (1) se compose de carton, en particulier de carton ondulé, de plastique, en particulier de plaques de plastique alvéolaire, ou d'une combinaison de ces matériaux, et/ou **en ce qu'**un panneau d'isolation sous vide (5) se compose de plusieurs panneaux d'isolation sous vide plus petits (5), adjacents en affleurement les uns contre les autres, et/ou en ce que le fond (2) du conteneur extérieur en forme de caisse (1) est réalisé sous forme de fond se repliant automatiquement et **en ce que** le fond (2) du conteneur extérieur (1) est recouvert sur le côté intérieur avec une couche de protection supplémentaire (2').

12. Insert cohésif de type cadre pour un conteneur extérieur en forme de caisse d'un conteneur de transport dans l'ensemble en forme de caisse, l'insert (11) présentant des panneaux d'isolation sous vide (5) en forme de plaques qui sont réalisés sous forme parallélépipédique avec des bords lisses et qui sont disposés par paires les uns en face des autres soit avec les deux bords en butée l'un contre l'autre soit avec les deux bords faisant saillie librement, et/ou
étant réalisés sous forme parallélépipédique avec des bords lisses et étant disposés sur la périphérie à chaque fois en butée bout-à-bout au niveau d'un bord, et librement en saillie au niveau de l'autre bord, et/ou
étant réalisés sous forme parallélépipédique mais avec des bords biseautés en onglet à 45° et étant disposés en butée l'un contre l'autre en onglet, et
les panneaux d'isolation sous vide ainsi disposés (5) étant fixés avec au moins un moyen de serrage (10), de préférence avec deux moyens de serrage (10) espacés l'un de l'autre, dans leur position relative mutuelle.

13. Insert selon la revendication 12, **caractérisé en ce qu'**à chaque fois un moyen de serrage (10) est disposé à proximité de l'un des bords périphériques des panneaux d'isolation sous vide (5), et/ou
**en ce que** là où, du côté extérieur, un moyen de serrage (10) est disposé à côté de l'un des bords périphériques des panneaux d'isolation sous vide (5), un cadre de support rigide (5') est disposé au niveau du côté intérieur des panneaux d'isolation sous vide (5), lequel agit en tant que butée pour les forces appliquées depuis l'extérieur par le moyen de serrage (10) disposé à cet endroit, et/ou
**en ce que** le moyen de serrage (10) est une bande de serrage (10), un câble de serrage, une pince de serrage en forme de U, une feuille rétractable appliquée de manière rétractable sur les panneaux d'isolation sous vide (5) ou un moussage en matière plastique pouvant être moussée, en particulier en polyuréthane, appliqué sur la périphérie des panneaux d'isolation sous vide (5) des parois latérales (3), différents types de moyens de serrage (10) pouvant en option être utilisés de manière combinée les uns avec les autres.

14. Insert selon la revendication 12 ou 13, **caractérisé en ce que** les arêtes des panneaux d'isolation sous vide (5) sont protégées avec des éléments de protection d'arêtes (12), de préférence en plastique, qui sont disposés entre les panneaux d'isolation sous vide (5) et le moyen de serrage (10) ou les moyens de serrage (10),
de préférence, un panneau d'isolation sous vide (5) associé au fond (2) étant disposé sous les panneaux d'isolation sous vide (5) des parois latérales (3) et correspondant, de par sa longueur et sa largeur, à la longueur extérieure et à la largeur extérieure des panneaux d'isolation sous vide assemblés (5) des parois latérales (3), ou de préférence étant dimensionné de manière légèrement plus grande, et
les éléments de protection des arêtes (12) s'étendant jusqu'au panneau d'isolation sous vide (5) associé au fond (2), de telle sorte que le panneau d'isolation sous vide (5) associé au fond (2) soit serré conjointement avec les panneaux d'isolation sous vide (5) des parois latérales (3) .

15. Insert selon l'une quelconque des revendications 12 à 14, **caractérisé en ce qu'**un panneau d'isolation sous vide (5) associé au fond (2) est disposé à l'intérieur des panneaux d'isolation sous vide (5) des parois latérales (3) et correspond, de par sa longueur et sa largeur, à la longueur intérieure libre et à la largeur intérieure des panneaux d'isolation sous vide assemblés (5) des parois latérales (3), ou de préférence est dimensionné de manière légèrement plus grande.
